Europäisches Patentamt

European Patent Office

Office européen des brevets

(19)

(11) Veröffentlichungsnummer : **0 162 037**
**B1**

(12)

# EUROPÄISCHE PATENTSCHRIFT

(45) Veröffentlichungstag der Patentschrift :
26.04.89

(21) Anmeldenummer : 85890048.3

(22) Anmeldetag : 27.02.85

(51) Int. Cl.⁴ : **B 29 C 45/00**, B 29 C 45/20,
B 29 C 45/77

(54) Verfahren zum Herstellen von Spritzgussteilen und Spritzgussform zur Durchführung des Verfahrens.

(30) Priorität : 21.03.84 AT 944/84
07.08.84 AT 2550/84

(43) Veröffentlichungstag der Anmeldung :
21.11.85 Patentblatt 85/47

(45) Bekanntmachung des Hinweises auf die Patenterteilung : 26.04.89 Patentblatt 89/17

(84) Benannte Vertragsstaaten :
AT BE CH DE FR GB IT LI LU NL SE

(56) Entgegenhaltungen :
CH—A— 530 259
DE—A— 2 822 033
DE—A— 3 303 756
US—A— 4 286 941

(73) Patentinhaber : Sterner, Franz
Mühlstrasse 21
A-4616 Marchtrenk (AT)

(72) Erfinder : Sterner, Franz
Mühlstrasse 21
A-4616 Marchtrenk (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

**Beschreibung**

Die Erfindung betrifft ein Verfahren nach dem Oberbegriff des Patentanspruches 1.

Ferner betrifft die Erfindung eine Spritzgußform gemäß dem Oberbegriff des Patentanspruches 7 zur Herstellung von Spritzgußteilen nach diesem Verfahren.

Ein derartiges Verfahren und eine entsprechende Spritzgußform für die Herstellung von Spritzgußteilen aus bei der Abkühlung verfestigenden Materialen, z. B. Thermoplasten, sind aus der US-A-4 286 941 bekannt. Dabei wird eine dickwandige Einspritzdüse verwendet, die mit einem wärmeisolierenden Mundstück zum Anschluß an die Eintrittsöffnung der Spritzgußform versehen ist, wobei dieses Mundstück durch eine über Kipphebel ein- und ausschiebbare Düsennadel abgeschlossen wird und nur für den Einspritzvorgang freigegeben wird. Der lichte Querschnitt der Durchtrittsöffnung des Mundstückes entspricht etwa dem Querschnitt der Düsennadel und ist groß im Verhältnis zum übrigen Durchtrittsquerschnitt der Einspritzdüse, ihrem Einlaßquerschnitt und dem Volumen des Formnestes. Ferner ist die Wandstärke der Einspritzdüse mehrfach größer als der Durchtrittsquerschnitt der Düse. Durch die Herstellung des Mundstückes aus wärmeisolierendem Material soll erreicht werden, daß es vor dem Schließen der Düsennadel am Ende des Einspritzvorganges zu keiner Verfestigung des durchgetretenen Materials kommt, damit die einwandfreie Funktion der Düsennadel gewährleistet bleibt und in den Spritzling keine größeren, vorher verfestigten und durch die Verformung mittels der Düsennadel umkristallisierten Materialreste hineingelangen. Vorteilhaft ist, daß unmittelbar, d. h. ohne Zwischenschaltung eines Zufuhrkanales zwischen dem Mundstück der Einspritzdüse und dem Formnest gearbeitet werden kann. Es sind aber in der Form große Einspritzöffnungen notwendig, wobei sich im Bereich dieser Einspritzöffnungen zwangsweise am Formling entsprechend große Abrißstellen ergeben werden. Aus diesen Gründen und auch wegen des komplizierten Aufbaues der Einspritzdüse mit der verstellbaren Düsennadel, die gesondert gesteuert werden muß, sind das bekannte Verfahren und die zugehörige Spritzgußform in ihrer Anwendung beschränkt.

Warm verfestigende oder vulkanisierende Materialien, wie Flüssigsilikone oder Kautschuk, werden von der Spritzgußmaschine oder Mischeinrichtung dem Formnest meist mit einem Zufuhrkanal zugeführt, wobei diese Zufuhrkanäle bei mehreren Formnestern zu einer Verteilerspinne zusammengefaßt werden. Zufuhrkanäle und Verteilerspinnen haben die Formtemperatur, die Spritzgußteile müssen nach dem Guß von den Enden der Angußstangen bzw. Verteilerspinnen abgetrennt werden, was zu Oberflächenbeschädigungen bzw. zur Gratbildung am Ansatzbereich der Angußstangen führt, wodurch die Brauchbarkeit der Spritzgußteile für höhere Anforderungen, beispielsweise für den Einsatz in Elektro- oder Elektronikgeräten in Frage gestellt wird. Bei der Verarbeitung von ausvulkanisiertem oder verfestigendem Zweikomponentenmaterial ist ein Recycling des Materials der Angußstangen oder Verteilerstangen unmöglich. Bei einem Gießen mit schwallartiger Materialzufuhr ergibt sich ein schwieriges Füllverhalten durch die im Formenhohlraum eingeschlossene Luft. Der Temperatursprung zwischen verspritztem Material und Form ist gerade bei warm verfestigenden Materialien nur schwer beherrschbar. Bei der Bearbeitung von Zweikomponenten-Flüssigsilikonen soll die Materialtemperatur im Zufuhrbereich nicht über 20 bis 40 °C steigen, wogegen das Formnest zur Verfestigung und zur Erzielung der gewünschten Endeigenschaften des Spritzgußteiles auf beispielsweise 240 °C erwärmt werden muß.

Wegen der aufgezeigten Schwierigkeiten werden viele Bauteile nach anderen Verfahren und auf anderen Vorrichtung hergestellt. Dies gilt insbesondere für Isolationsdurchführungen aus Silikon oder Gummimaterial für Elektronikgeräte und -rechner. Die bisher aus Matten in mehrstufigen Verfahren gepreßt und dann abgetrennt und nachbearbeitet werden. Kontaktmatten, die den Grundaufbau für die Tastenfelder von Rechnern, Tastentelefonen und Schreibmaschinen bilden, werden ebenfalls meist aus Matten gefertigt, wobei einzelne Kontaktstücke gefertigt, auf eine Grundplatte aufgelegt, das Mattenmaterial aufgetragen und schließlich eine Pressung oder Spritzung durchgeführt wird. Aus der DE-A-28 22 033 ist es bekannt, den Mattenkörper in einem Spritzgußverfahren herzustellen, wobei zunächst aus leitend gemachtem Gummimaterial Kontaktpillen für die einzelnen Erhebungen des Tastenfeldes hergestellt und dann der Mattenkörper unter Erwärmung der Kontaktpillen in ein seine Endform bestimmendes Formnest eingespritzt wird. Das Einspritzen erfolgt über einen Einspritzkanal der Form von einem Rand der Matte her. Es ergibt sich daher eine Materialausrichtung in Richtung des Materialflusses im Formenhohlraum, die unterschiedliche Elastizitätseigenschaften an verschiedenen Stellen der Matte bedingen können. Übliche Kontaktmatten besitzen einen Mattenkörper aus gummiartigem Material, der nur eine ganz geringe Eigensteifigkeit aufweist, so daß sich die Kontaktmatten nur schwer handhaben lassen und beim Einbau von Hand aus eingelegt werden müssen.

Bei größeren Spritzgußteilen ist es bekannt, in das Formnest mit einer Spritzdüse einzuspritzen, die mehrere zueinander einen Anstellwinkel einnehmende Einspritzkanäle aufweist.

Aus der CH-A-530 259 ist es bekannt, bei der Steuerung einer Spritzgußmaschine mit über eine Düsennadel abschließbarer Einspritzdüse verschiedene Betriebsparameter, darunter auch den Einspritzdruck zu überwachen und die Spritzgußmaschine nach diesen Parametern zu steuern. Die Einspritzdüse wird mit Hilfe der Düsennadel erst für den Einspritzvorgang freigegeben, wenn der gewünschte Sollwert des Einspritzdruckes erreicht ist.

Aufgabe der Erfindung ist die Schaffung eines Verfahrens der gegenständlichen Art, bei dem mit Hilfe einfach aufgebauter Spritzgußformen Spritzgußteile unter unmittelbarer Einspritzung in das Formnest und unter Beherrschung des dabei auftretenden Temperatursprunges sowohl aus Thermoplasten als auch aus warm verfestigenden und ausvulkanisierenden Materialen herstellbar sind, wobei eine Herstellung ohne sichtbare Angußstellen und ohne Gratbildung ermöglicht wird.

Eine Teilaufgabe der Erfindung besteht in der Schaffung einer zur Durchführung des Verfahrens geeigneten Spritzgußform.

Weitere Teilaufgaben der Erfindung betreffen eine exakte Mengenregelung bei der Materialzufuhr mit einfachen Mitteln und die Schaffung eines neuen, verbesserten und auch bessere Produkte liefernden Herstellungsverfahrens für Kontaktmatten.

Die Hauptaufgabe der Erfindung wird durch die im kennzeichnenden Teil des Patentanspruches 1 angegebenen Verfahrensschritte gelöst.

Wegen des geringen Durchmessers der Düsenspitze werden bei geeigneter Formgebung der Düsenspitze die Anspritzstellen am Spritzgußteil praktisch unsichtbar und können im Bedarfsfall sogar in eine Vertiefung des Spritzgußteiles hinein verlegt werden. Das Herstellungsmaterial schließt im drucklosen Zustand den lichten Querschnitt der Düsenspitze ab, tritt also nur unter dem Einspritz-Überdruck durch die Düsenspitze durch. Eine eigene Düsennadel ist nicht mehr erforderlich. Wegen des geringen Wärmeleitvermögens der Düsenspitze in Längsrichtung kann nur der formseitige Endbereich der Düsenspitze vor bzw. nach dem Einspritzvorgang die Formtemperatur annehmen. Falls dabei in diesem Endbereich ein Pfropfen aus verfestigtem bzw. erstarrtem Spritzgußmaterial entsteht hat er eine so kleine Eigenmasse, daß er, wenn er beim nächsten Spritzvorgang in den Spritzling gelangt, das Gesamtgefüge dieses Spritzlings nicht beeinträchtigt. Wegen des kleinen Durchtrittsquerschnitts tritt das Material in dünnem Strahl in die Spritzgußform ein. Im Formhohlraum befindliche Luft kann ungestört entweichen.

Das Verfahren nach Anspruch 2 ermöglicht eine einfache und genaue Regelung, wobei unter Verwendung eines Materialmassevorrates geregelt wird. Dabei kann die Materialzufuhr genau zum Füllzeitpunkt des Formnestes unterbrochen werden, womit eine genaue Dosierung erzielt und sonst durch Materialüberschuß bedingte Gratbildungen an den Trennstellen zwischen den Formteilen vermieden werden.

Bei einer Durchführung des Verfahrens gemäß Anspruch 3 wird die Luftableitung aus dem Formnest begünstigt und es wird möglich, den Abreißpunkt der Düsenspitze ins Innere des Formlings hineinzuverlegen.

Neben der Herstellung von Spritzgußteilen aus thermoplastischem Kunststoffmaterial ist das erfindungsgemäße Verfahren besonders für die Herstellung folgender Teile geeignet : Hygiene- und Gebrauchsartikel aus Gummi und kautschukartigem Material, Dichtungen, O-Ringe, unmittelbar an eine Ventilspindel angespritzte Dichtungs- und Ventilkörper, Teilisolierungen die unmittelbar an Kontaktstücke angeformt werden, Isolierteile, Leitungsdurchführungen und Steckerteile auch für empfindliche Geräte der Elektronik, Kontaktmatten für die Herstellung von Tastenfeldern usw.

Bei einer Herstellung von Kontaktmatten nach der Ausbildung des Verfahrens gemäß Anspruch 4 wird, da für jede Erhebung zentral eingespritzt wird, die Elastizitätssymmetrie und Dauerelastizität der Erhebungen gegenüber nach anderen Verfahren hergestellten Kontaktmatten verbessert. Im einzelnen kann man dabei, wie im Anspruch 5 angegeben, arbeiten oder die Kontaktbereiche der Matte durch Metallplattierung herstellen.

Mit der Ausbildung des Verfahrens gemäß Anspruch 6 kann man eine Kontaktmatte herstellen, die wegen des relativ steifen Tragkörpers auch in Montagemaschinen gehandhabt werden kann. Während bei bekannten Kontaktmatten die federnden Eigenschaften der napfförmigen Erhebungen auch davon beeinflußt werden, wie und in welchem Abstand von den Erhebungen die Matte abgestützt wird, stützt sich bei einer nach dem zuletzt genannten Verfahren hergestellten Matte jede napfförmige Erhebung auf der steiferen Platte selbst ab, so daß die federnden Eigenschaften von der Plattenauflage nicht beeinflußt werden. Auch die steifere Platte kann unter Anwendung des erfindungsgemäßen Verfahrens gespritzt werden.

Die Spritzgußform zur Durchführung des erfindungsgemäßen Verfahrens zeichnet sich durch die im kennzeichnenden Teil des Anspruches 7 angegebenen Merkmale aus.

Bei dieser Spritzgußform kann die Düsenspitze an das Ende der Einspritzdüse angesetzt oder angeformt sowie mit einer Wärmeisolierung versehen sein.

Durch eine Ausbildung nach Anspruch 8 wird der Wärmeübergang zwischen Formteilen und Einspritzdüse herabgesetzt.

Verschiedene Arten der Anbringung der Düsenspitze an der Form sind in den Ansprüchen 9 bis 11 angegeben. Bei der Ausführung nach Anspruch 11 kann man die Düsenspitze bei Beginn des Spritzvorganges bis unter die Formteilungsebene einführen, so daß die Luft aus dem Formenhohlraum über die Formentrennflächen entweichen kann.

Besondere Ausbildungen der Kanüle bzw. Düsenspitze zur Verringerung des Wärmeflusses in Längsrichtung sind in den Ansprüchen 12 und 13 angegeben.

Weitere Einzelheiten der Spritzgußform entnimmt man den Ansprüchen 14 bis 18.

Anspruch 19 gibt eine erfindungsgemäße Ausführungsform einer Spritzgußform für die Herstellung einer Kontaktmatte an.

Weitere Einzelheiten und Vorteile des erfindungsgemäßen Verfahrens und der zur seiner Durchführung vorgesehen Spritzgußformen ergeben sich aus der nachfolgenden Zeichnungsbeschreibung.

In der Zeichnung ist der Erfindungsgegenstand beispielsweise veranschaulicht. Es zeigen

Fig. 1   eine für die Herstellung von Isolationsdurchführungen bestimmte Spritzgußform im Teilschnitt;

Fig. 2   einen Endteil der Spritzdüse nach Fig. 1 in einer Ausführungsvariante,

Fig. 3   einen Schnitt nach der Linie 3-3 der Fig. 1,

Fig. 4   in einer der Fig. 1 entsprechenden Darstellungsweise eine weitere Spritzgußform für die Herstellung flacherer Teile, im Teilschnitt,

Fig. 5   eine andere Ausführungsform der Düsenspitze der Einspritzdüse bei der Spritzgußform nach Fig. 4,

Fig. 6   eine weitere Ausführungsform der Düsenspitze im Schnitt,

Fig. 7   einen Teilschnitt durch eine Wechselform für die Herstellung einer Kontaktmatte beim Zusammenwirken eines ersten mit einem zweiten Formteil,

Fig. 8   in Ergänzung zu Fig. 7 einen Teilschnitt durch die Wechselform beim Zusammenwirken des ersten mit einem dritten Formteil,

Fig. 9   eine Kontaktmatte in Draufsicht und

Fig. 10   in stark vergrößertem Maßstab einen Querschnitt durch die Kontaktmatte nach Fig. 9 während der Herstellung der napfförmigen Erhebungen in einer Spritzgußform.

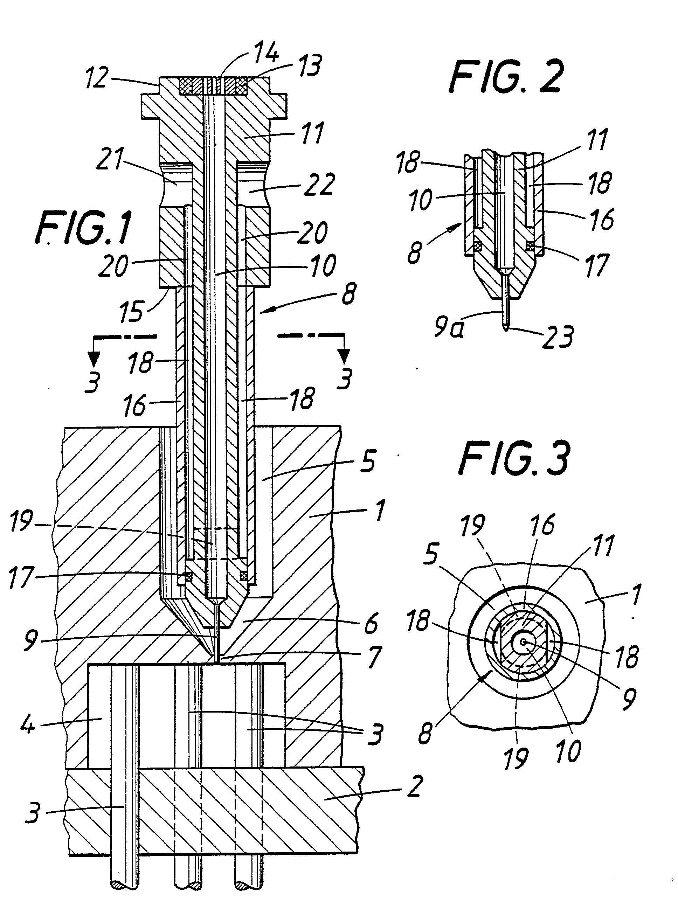

In Fig. 1 ist eine aus einem Formoberteil 1, einem Formunterteil 2 und aus Stiften 3 bestehende Spritzgußform für die Herstellung von Kontaktdurchführungen aus Isoliermaterial vorgesehen. Die Formteile 1 und 2 umschließen ein die gewünschte Außenform des herzustellenden Durchführungsteiles bestimmendes Formnest 4 in das durch den Formteil 2 hindurch die Stifte 3 einragen. Für das Entformen wird der Formteil 1 abgehoben, wonach entweder die Stifte 3 nach unten oder der Formteil 2 nach oben verstellt und damit der fertige Spritzling abgestreift wird. Die Begriffe « oben » und « unten » beziehen sich nur auf die Zeichnung. Die Form kann auch eine um 90° oder 180° verdrehte Gebrauchsstellung haben.

Im oberen Formteil 1 ist eine Sackbohrung 5 vorgesehen, deren Boden 6 konisch zu einer Durchtrittöffnung 7 abfällt. In die Sackbohrung 5 ist mit allseitigem Abstand von deren Wand eine in ihrer Gesamtheit mit 8 bezeichnete Einspritzdüse eingesetzt, die eine als Kanüle 9 ausgebildete Düsenspitze trägt, welche durch die Durchtrittsöffnung 7 hindurchreicht. Das Kanülenende kann mit der Innenwand des Formnestes 4 fluchten oder auch leicht in das Formnest einragen. Die eine Düsenöffnung enthaltende Kanüle 9 schließt an eine einen vielfach größeren Durchtrittsquerschnitt aufweisende Bohrung 10 in einem Innenkörper der Einspritzdüse 8 an, welche Bohrung 10 einen zur Düsenöffnung führenden Zufuhrkanal bildet. Der Innenkörper 11 besitzt oben einen Anschluß 12, mit dem die Spritzdüse 8 an eine Spritzmaschine bzw. an ein zu einer Spritzmaschine führendes Anschlußrohr oder Verteilersystem angeschlossen werden kann.

Über der Eintrittsöffnung der Bohrung 10 ist innerhalb eines Dichtungsringes 13 eine als Sieb dienende Lochplatte 14 angebracht, wobei die Löcher dieser Lochplatte einen beispielsweise um 0,02 mm kleineren Durchmesser aufweisen als die zylindrische Bohrung der Kanüle 9. Der Bohrungsdurchmesser der Kanüle wird, wenn Flüssig-Silikone verarbeitet werden, beispielsweise mit mindestens 0,01 mm gewählt. Die Wandstärke der Kanüle kann bei 0,05 mm beginnen. Beim Durchtritt durch die Lochplatte 14 wird das Material homogenisiert, wobei die Lochplatte Verunreinigungen zurückhält, so daß ein Verstopfen der Kanüle verhindert wird.

Der Körper 11 der Spritzdüse 8 besitzt einen Absatz 15 und ist ab diesem Absatz 15 bis in die Nähe des die Kanüle 9 tragenden Endes an zwei gegenüberliegenden Seiten abgefast, wobei diese Abfasungen zwischen dem Düsenkörper 11 und einer übergeschobenen Hülse 16 die im Bereich des freien Endes durch einen O-Ring 17 abgedichtet ist und dicht an den Absatz 15 anschließt, Kanäle 18 entstehen, die im Bereich des freien Düsenendes durch außen im Körper 11 vorgesehen Querkanäle 19 verbunden sind und über vom Absatz 15 ausgehende Bohrungen 20 mit Anschlußbohrungen 21, 22 in Verbindung stehen, an die eine Kühlmittel- oder Temperiermittelleitung anschließbar ist, so daß das Kühl- bzw. Temperiermittel über den größten Teil der Länge den in die Bohrung 5 eingreifenden Düsenkörper 11 umspült und damit auf jener Temperatur hält, die für die Flüssigerhaltung des zu verspritzenden Materials am günstigsten ist.

Nach Fig. 1 ist die Kanüle 9 bleibend in die Durchtrittsöffnung 7 eingesetzt und auch die gesamte Einspritzdüse 8 ist dabei bleibend mit dem Oberteil 1 der Form verbunden.

Nach Fig. 2 trägt die Spritzdüse 8 eine am Ende 23 konisch verjüngte Kanüle 9a, die bei jedem Spritzvorgang in eine Durchtrittsöffnung 7 bzw. durch diese hindurch und wieder zurück eingeführt wird, wobei es möglich ist, eine oder mehrere Spritzdüsen auch für verschiedene mit entsprechenden Sackbohrungen 5 und Einlaßöffnungen 7 ausgestattete Spritzgußformen zu verwenden. Im Materialzuführungsweg, beispielsweise in einer an die Bohrung 10 anschließenden Zufuhrleitung kann ein Druckwächter vorgesehen sein, der den Druck unter dem das Material steht überwacht. Dieser Druck ist während des Einspritzvorganges und während der Füllung des Formnestes 4 niedriger als ab dem Augenblick, in dem der Materialspiegel das Ende der Kanüle 9 erreicht. Nach Fig. 1 kann über den Druckanstieg eine Steuereinrichtung betätigt werden, die den weiteren Materialzufluß stoppt. Wenn nach Fig. 2 das Kanülenende 23 in den Formenhohlraum eingeführt wird, kann über den Druckanstieg zunächst eine Steuereinrichtung zum Zurückziehen der Spritzdüse bis zum Fluchten des Kanülenendes 23 mit der Formwandung betätigt und nach Erreichen dieser Stellung erst der Materialzufluß gestoppt werden.

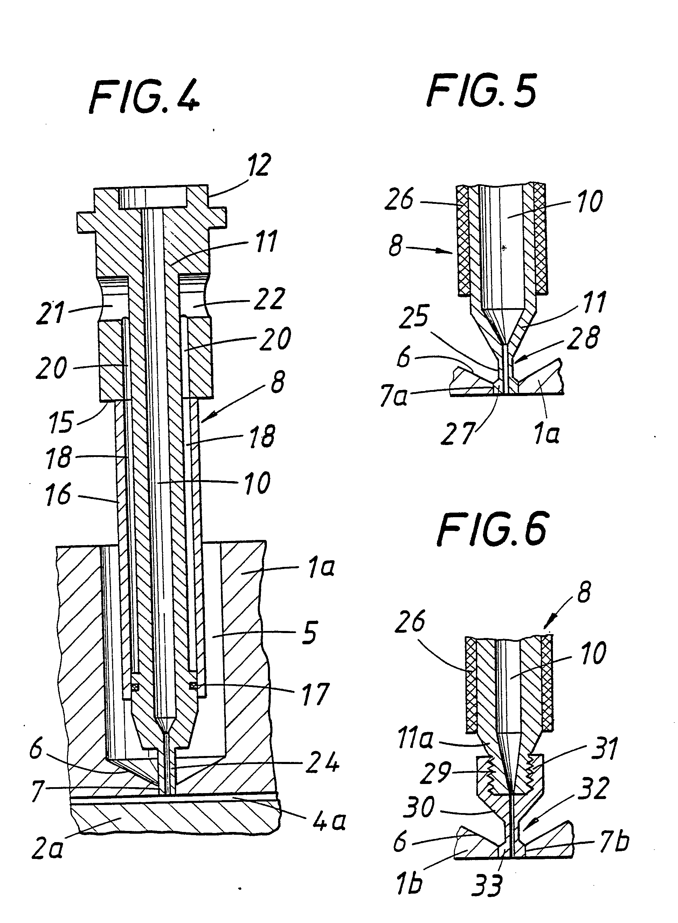

Die Ausführung nach Fig. 4 unterscheidet sich von jener nach den Fig. 1 bis 3 im wesentlichen nur dadurch, daß die wieder aus Ober- und Unterteil 1a, 2a bestehende Spritzgußform ein anderes Formnest 4a umschließt und daß eine Düsenspitze 24 einteilig an den inneren Düsenkörper 11 angeformt ist. Diese Düsenspitze 24 hat nach Fig. 4 eine gleichmäßige, dünne Wandstärke und paßt in die Öffnung 7.

Nach Fig. 5 ist eine Düsenspitze 25 an den Düsenkörper 11 einer mit einem Kühlmantel 26 ausgestatteten Einspritzdüse 8 angeformt und besitzt zwischen dem Körper 11 und einem verbreiterten Kopfteil 27 eine Einschnürung 28, die in eine entsprechend große Öffnung 7a des oberen Formteiles 1a paßt. Durch die Einschnürung 28 wird der Wärmefluß von dem am Formteil 1a aufgeheizten Kopfteil 27 auf den Teil 11 zu begrenzt bzw. umgekehrt beim Einspritzen von heißem Material eine Abkühlung der Düsenspitze über die Einschnürung hinaus verhindert. Die Wandstärke im Bereich der Einschnürung 28 kann unter 0,5 mm betragen.

Nach Fig. 6 besitzt der Düsenkörper 11a einen Gewindeansatz 29, auf dem eine Düsenspitze 30 aufgeschraubt ist, die einen Gewindeteil 31, eine Einschnürung 32 und einen Kopfteil 33 aufweist. Der Kopfteil 33 greift in die Einlaßöffnung 7b des Formoberteiles 1b ein.

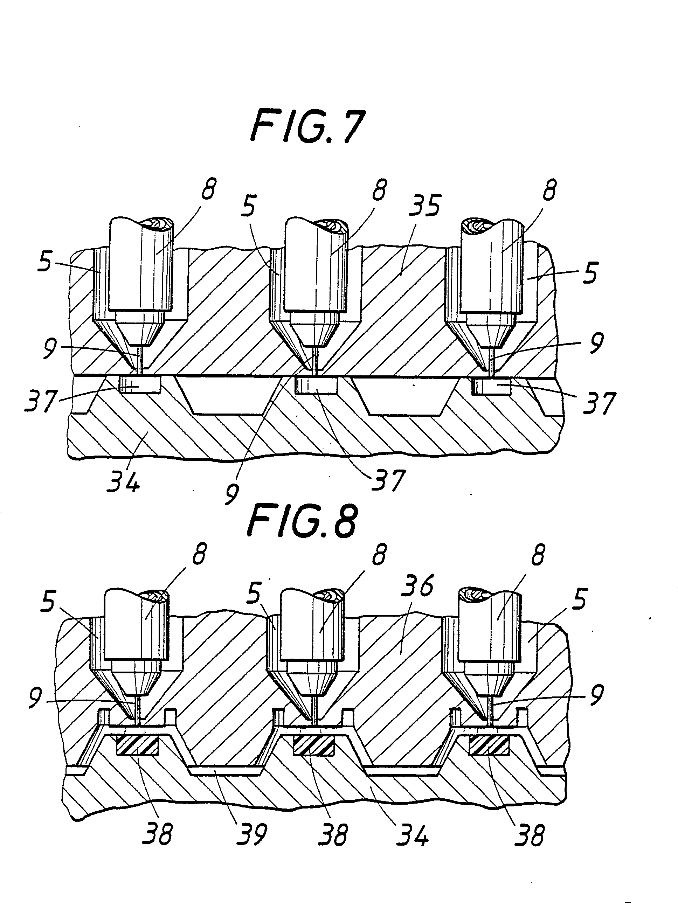

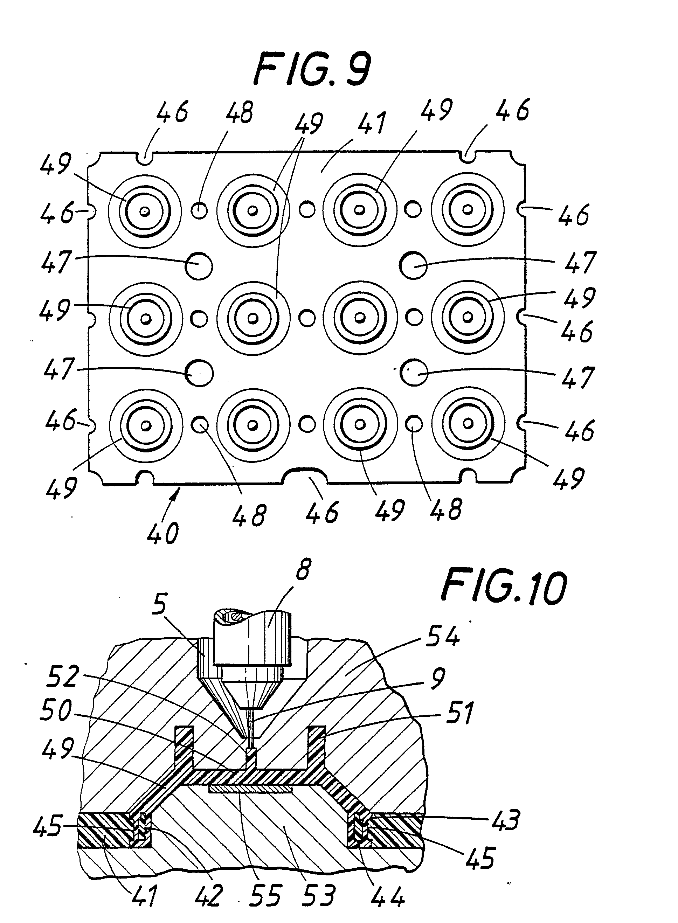

Nach den Fig. 7 und 8 ist für die Herstellung einer beispielsweise in ihrem Endaussehen der noch zu beschreibenden Kontaktmatte nach Fig. 9 entsprechenden Kontaktmatte eine als Schwenk- oder Schiebeform konzipierte Wechselform mit einem ersten Formteil 34, einem zweiten Formteil 35 und einem dritten Formteil 36 vorgesehen. Der erste und der zweite Formteil 34, 35 schließen miteinander in der gewünschten Endanordnung Formnester 37 ein, die zur Herstellung von Kontaktstücken, insbesondere sogenannten Kontaktpillen von je einer Einspritzdüse 8 über als Kanülen 9 ausgebildete Düsenspitzen mit einem leitfähigen Silikongemisch beschickbar sind.

Es ist hier noch zu erwähnen, daß sowohl die Formen 1, 2, 1a, 2a, 1b, als auch die Formteile 34, 35, 36 mit nicht dargestellten Beheizungseinrichtungen ausgestattet sind, um das eingespritzte Material auf die notwendige Verfestigungs- bzw. Vulkanisationstemperatur von beispielsweise 240 °C für bestimmte Silikongemische zu erwärmen.

Nach der Herstellung der Kontaktpillen 38 in den Formnestern 37 wird der erste Formteil 34 vom zweiten Formteil 35 getrennt und mit dem dritten Formteil 36 in Wirkverbindung gebracht, der nun mit dem ersten Formteil 34 und den von diesem freigelassenen Bereichen der Kontaktpillen 38 ein Formnest 39 für eine verkehrt napfförmige Erhebungen aufweisende Kontaktmatte einschließt. Im Bereich jeder Erhebung mündet im Formnest wieder die Düsenspitze 9 einer Einspritzdüse 8, wobei auch hier die Düsen 8 mit dem Formoberteil 35 bzw. 36 verbunden oder in die Sackbohrungen 5 ein- und ausfahrbar ausgebildet sein können.

Um einen Überblick über die Größenverhältnisse zu schaffen, wird angenommen, daß innerhalb der Matte der Mittelabstand von Kontaktpille zu Kontaktpille 38 12 mm betragen kann. Es sind aber auch Mittelabstände unter 5 mm möglich. Das in das Formnest 39 eingespritzte Material verbindet sich mit den Kontaktpillen 38, so daß die Kontaktmatte nach der Entformung gebrauchsfertig ist.

Es ist nach einer Weiterbildung auch möglich, einen vierten Formteil vorzusehen, der in einer dritten Arbeitsstellung mit dem Formteil 34 und der auf diesem aufliegenden Kontaktmatte zusammenwirkend der Anspritzung von Kontaktknöpfen- oder -tasten dient, welche schon die notwendigen alphanumerischen Zeichen tragen können.

Bei den beschriebenen Spritzgußformen 1, 2, 1a, 2a, 1b, 34, 35, 36 wird beim Spritzvorgang mit einem Massepolster gearbeitet, d. h. das Material wird von der Spritzgußmaschine im Überschuß bereitgestellt. Der Druck im Anschluß- oder Verteilersystem bzw. am Austritt der Spritzgußmaschine oder unmittelbar in den Kanälen 10 wird überwacht bzw. geregelt. Bei Füllung eines Formnestes kommt es zu einem Druckanstieg, der bei der Regelung des Spritzvorganges ausgenützt wird.

Es wurde schon erwähnt, daß mit der Form nach den Fig. 7 und 8 eine etwa die Grundform der Kontaktmatte nach Fig. 9 aufweisende Kontaktmatte hergestellt werden kann. Die dort vorgesehene Kontaktmatte 40 besitzt eine Tragplatte, die vorzugsweise aus einem Spritzgußteil aus thermoplastischem oder duroplastischem Material hergestellt werden kann und die an den gewünschten Anbringungsbereichen verkehrt napfförmiger Erhebungen mit Löchern 42 versehen ist. An der Oberseite der Platte 41 sind um die Löcher 42 verlaufende Ringnuten 43 vorgesehen. An der Unterseite ist die Platte 41 um die Löcher mit Absätzen 44 versehen. Die Ringnuten 43 und die Absätze 44 sind durch abstandsweise angeordnete kleine Löcher 45 verbunden. In der Platte 41 können ferner Randaussparungen 46 und weitere Löcher 47, 48 vorgesehen sein, die als Montagehilfen, insbesondere bei automatischer Montage, oder für die Durchführung von Leitungen oder Befestigungsmitteln dienen können.

Im Bereich jedes Loches 42 ist an die Platte 41 ein verkehrt napfförmiger Teil 49 aus gummielastischem Material insbesondere wieder warm verfestigendem Flüssig-Silikon angespritzt. Die napfförmigen Teile 49 besitzen einen konischen oder glockenförmigen Grundkörper, einen Zwischenboden 50, einen Ringwulst 51 und zentrisch innerhalb dieses Ringwulstes eine Anspritzstelle 52. Die Herstellung des napfförmigen Teiles 49 erfolgt wieder in einer Spritzgußform 53, 54, die jener nach Fig. 8 ähnlich ist und in die die Platte 41 eingelegt wird. Beim Einspritzen des Materials wird der den napfförmigen Teil 49 bestimmende Formenhohlraum gefüllt, dabei füllt das Material auch die Nut 43, den Absatz 44 und die Löcher 45, so daß die napfförmigen Teile 49 sicher an der Platte 41 verankert sind. Nachträglich kann eine Metallplattierung 55 angebracht werden, die einen Kontakt darstellt.

**Patentansprüche**

1. Verfahren zum Herstellen von Spritzgußteilen in einer Spritzgußform, welche zwei oder mehrere Formteile (1, 2, 3 ; 1a, 2a ; 34, 35, 36 ; 53, 54) aufweist, die ein Formnest (4 ; 4a ; 37, 39) für den Spritzgußteil umschließen, in welches das Herstellungsmaterial mit Hilfe wenigstens einer Einspritzdüse (8) durch eine zugeordnete Eintrittsöffnung (7 ; 7a ; 7b) unmittelbar eingespritzt wird, wobei die Form auf eine Verfestigungs- oder Erstarrungstemperatur für das im flüssigen Einspritzzustand eine abweichende Temperatur aufweisende Herstellungsmaterial, insbesondere Kunststoffmaterial oder warm verfestigendes oder vulkanisierendes Material temperiert wird, dadurch gekennzeichnet, daß das Herstellungsmaterial mittels einer über den Düsenkörper (8) vorragenden Düsenspitze (9 ; 24, 25 ; 30) eingespritzt wird, die an die einen angepaßten Durchmesser aufweisende Eintrittsöffnung (7, 7a, 7b) ansetzbar bzw. in diese einführbar ist und in ihrer Längsrichtung ein nur geringes Wärmeleitvermögen aufweist und deren lichter Querschnitt kleiner als 1 mm$^2$, insbesondere 0,5 mm$^2$ gehalten ist, wobei ein zur Düsenspitze (9 ; 9a ; 24, 25 ; 30) führender Zufuhrkanal (10) der Einspritzdüse (8) einen ein Vielfaches des Durchtrittsquerschnittes der Düsenspitze ausmachenden, lichten Querschnitt aufweist.

2. Verfahren nach Anspruch 1, dadurch gekennzeichnet, daß beim Spritzgußvorgang der Materialdruck in dem den Zufuhrkanal (10) der Einspritzdüse (8) enthaltenden Zufuhrbereich überwacht und geregelt wird, wobei der bei Vollfüllung des Formnestes (4, 4a) auftretende Druckanstieg als Kriterium für die Füllung des Formnestes gewertet wird.

3. Verfahren nach Anspruch 1 oder 2, dadurch gekennzeichnet, daß beim Spritzgußvorgang die als Endkanüle (9a) ausgebildete Düsenspitze der Einspritzdüse (8) durch die Eintrittsöffnung (7) in das Formnest (4) eingeführt und während des Einspritzens entsprechend dem Füllungszustand des Formnestes aus diesem herausgezogen wird.

4. Verfahren nach einem der Ansprüche 1 bis 3, dadurch gekennzeichnet, daß bei der Herstellung von mehrere verkehrt napfförmige Erhebungen (49) aufweisenden Kontaktmatten (40) aus in verfestigtem bzw. vulkanisiertem Zustand gummielastischem Material in einer ein entsprechendes Formnest aufweisenden Form (34 bis 36 ; 53, 54) für jede Erhebung (49) in eine eigene, zentral zu dieser Ergebung angeordnete Einspritzöffnung (7) eingespritzt wird.

5. Verfahren nach Anspruch 4, dadurch gekennzeichnet, daß zunächst einzelne Kontaktpillen (38) und dann auf diese die napfförmigen Erhebungen der Matte gespritzt werden.

6. Verfahren nach Anspruch 4 oder 5, dadurch gekennzeichnet, daß für die Kontaktmatte eine Tragplatte (41) aus steifem Material verwendet wird, die im Bereich der vorzusehenden verkehrt napfförmigen Erhebungen (49) Öffnungen (42) und in den Randbereichen dieser Öffnungen Verankerungen aufweist und an die die napfförmigen Erhebungen aus gummielastischem Material in der Spritzgußform (53, 54) einzeln angespritzt werden.

7. Spritzgußform zur Herstellung von Spritzgußteilen nach dem Verfahren nach einem der Ansprüche 1 bis 6, welche Form zwei oder mehrere wenigstens zum Teil temperierbare Formteile (1, 2, 3, 1a, 2a, 1b, 34, 35, 36, 53, 54) aufweist, die ein Formnest (4, 4a, 37, 39) für den Spritzgußteil umschließen, das mittels einer Einspritzdüse (8) durch eine angepaßte Einspritzöffnung (7, 7a, 7b) mit dem Herstellungsmaterial beschickbar ist, dadurch gekennzeichnet, daß die Einspritzdüse eine, über den Düsenkörper vorragende Düsenspitze (9, 9a, 24, 25, 30) aufweist, die an die einen angepaßten Durchmesser aufweisende Eintrittsöffnung (7, 7a, 7b) ansetzbar bzw. in diese einführbar ist, in ihrer Längsrichtung ein nur geringes Wärmeleitvermögen aufweist und deren lichter Querschnitt kleiner als 1 mm$^2$, insbesondere 0,5 mm$^2$ gehalten ist, wobei ein zur Düsenspitze (9, 9a, 24, 25, 30) führender Zufuhrkanal (10) der Einspritzdüse (8) einen ein Vielfaches des Durchtrittsquerschnittes der Düsenspitze ausmachenden, lichten Querschnitt aufweist.

8. Spritzgußform nach Anspruch 7, dadurch gekennzeichnet, daß ein den Zufuhrkanal (10) und einen diesen umschliessenden Temperiermantel (16, 26) enthaltender Düsenkörper (11) mit allseitigem Abstand in eine Sacköffnung (5) eines Formteiles (1, 35, 36) eingreift und der Boden (6) der Sacköffnung konisch zu der Durchtrittsöffnung (7) für die über den Düsenkörper (11) überstehende Düsenspitze (9) angesenkt ist.

9. Spritzgußform nach den Ansprüchen 7 und 8, dadurch gekennzeichnet, daß das Ende der Düsenspitze (9, 27, 33) mit der Wandung des Formnestes (4, 37, 39) fluchtet.

10. Spritzgußform nach den Ansprüchen 7 und 8, dadurch gekennzeichnet, daß das Ende der als Kanüle ausgebildeten Düsenspitze etwa um den Kanülendurchmesser über die Wandung in das Formnest (4, 37, 39) einragt.

11. Spritzgußform nach Anspruch 7 oder 8, dadurch gekennzeichnet, daß die als Kanüle (9, 9a) ausgebildete Düsenspitze durch die Eintrittsöffnung (7) in das Formnest (4) hinein- und zurückverstellbar ist.

12. Spritzgußform nach einem der Ansprüche 7 bis 11, dadurch gekennzeichnet, daß die Wandstärke der Kanüle (9, 9a) in der Größenordnung von 0,05 bis 0,5 mm liegt und ihr Bohrungsdurchmesser wenigstens 0,1 mm beträgt.

13. Spritzgußform nach einem der Ansprüche 7 bis 12, dadurch gekennzeichnet, daß wenigstens die Düsenspitze (24, 25) einteilig an das Ende der Einspritzdüse (8) angeformt ist und wenigstens in einem Teilbereich ihrer Länge, insbesondere im Bereich von Einschnürungen (28, 32) Wandstärken unter 0,5 mm zur Verringerung des Wärmeflusses in Längsrichtung der Düsenspitze aufweist.

14. Spritzgußform nach Anspruch 13, dadurch gekennzeichnet, daß die Düsenspitze (25, 30) einen im Durchmesser vergrößerten, in die Eintrittsöffnung (7a, 7b) des Formnestes passenden Ansatzkopf (27, 33) aufweist.

15. Spritzgußform nach Anspruch 13 oder 14, dadurch gekennzeichnet, daß ein mit der Einspritzdüse (8) einteiliges Ansatzstück (29) über eine Steck- oder eine Schraubverbindung (31) mit einer auswechselbaren Düsenspitze (30) verbunden ist.

16. Spritzgußform nach Anspruch 15, dadurch gekennzeichnet, daß zwischen Ansatzstück (29) und Düsenspitze (33) wärmeisolierende Einlagen vorgesehen sind.

17. Spritzgußform nach einem der Ansprüche 7 bis 16, dadurch gekennzeichnet, daß im Materialzuführungsweg, insbesondere im Anschlußbereich (12) der Spritzdüse (8) an eine zu einer Einspritzpresse führende Leitung ein Sieb (14) vorgesehen ist, dessen Öffnungen kleiner sind als die Durchtrittsöffnung der Düsenspitze (9).

18. Spritzgußform nach einem der Ansprüche 7 bis 17, dadurch gekennzeichnet, daß für ein Formnest (39) mehrere Einspritzdüsen (8) vorgesehen sind.

19. Spritzgußform nach einem der Ansprüche 7 bis 18 zur Herstellung einer Kontaktmatte, insbesondere für die Tastenfelder von Rechnern, Schreibmaschinen und Telefonen, bei der verkehrt napfförmige Erhebungen in ihrem Bodenteil Kontaktstücke enthalten, dadurch gekennzeichnet, daß eine Wechselform (34, 35, 36) vorgesehen ist, bei der ein erster Formteil (34) mit einem zweiten Formteil (35) in der Endanordnung vorgesehene Formnester (37) für die Kontaktstücke (38) umschließt, im zweiten Formteil (35) für jedes Formnest eine Einspritzdüse (8) vorgesehen ist und der erste Formteil (34) in eine Verbindungsstellung mit einem dritten Formteil (36) verstellbar ist, der mit dem ersten Formteil (34) und den auf diesem verbleibenden Kontaktstücken (38) das gemeinsame Formnest (39) für die Matte umschließt und im Bereich jeder Erhebung mit einer weiteren Einspritzdüse (8) zum gleichzeitigen Einspritzen des die Matte bildenden Materials versehen ist.

## Claims

1. A process of manufacturing injection mouldings in an injection mold, which comprises two or more mold sections (1, 2, 3 ; 1a, 2a ; 34, 35, 36 ; 53, 54), which enclose a cavity (4 ; 4a ; 37, 39) for the injection molding, which cavity is directly charged with the molding material, which is injected by at least one injection nozzle (8) through an associated entrance opening (7 ; 7a ; 7b), in which process the mold is maintained at a solidification temperature for the molding material, which is injected in a liquid state at a different temperature and particularly consists of a plastic material or a hot-settable or hot-vulcanizable material, characterized in that the molding material is injected by a nozzle tip (9 ; 24, 25 ; 30), which protrudes beyond the nozzle body (8) and is adapted to be engaged at or introduced into the entrance opening (7, 7a, 7b), which is adapted in diameter, said nozzle tip has in its longitudinal direction only a low thermal conductivity and has an inside cross-section that is smaller than 1 mm$^2$, particularly 0.5 mm$^2$, and a supply passage (10) that is formed in the injection nozzle (8) and leads to the nozzle tip (9 ; 9a ; 24, 25 ; 30) has an inside cross-section which is a multiple of the flow area of the nozzle tip.

2. A process according to claim 1, characterized in that the pressure of the material in the supply region, which contains the supply passage (10) of the injection nozzle (8), is monitored and automatically controlled during the injection molding operation, and the pressure rise which takes place as the cavity (4, 4a) is detected as a criterion for the filling of the cavity.

3. A process according to claim 1 or 2, characterized in that the nozzle tip of the injection nozzle (8) constitutes a hollow end needle (9a) and during the injection molding operation is introduced through the entrance opening (7) into the mold cavity (4) and during the injecting operation is pulled out of the cavity in dependence on the degree to which it is filled.

4. A process according to any of claims 1 to 3, characterized in that in the manufacture of contact mats (40) having a plurality of inverted bowlshaped humps (49) from a material which has a rubberlike elasticity in a solidified or vulcanized state in a mold (34 to 36 ; 53, 54) which has a corresponding cavity the injection for each hump is effected through a separate injection opening (7), which is centrally disposed with respect to that hump.

5. A process according to claim 4, characterized in that individual contact tables (38) are injected first and the bowl-shaped humps of the mat are subsequently injected onto said contact tablets.

6. A process according to claim 4 or 5, characterized in that a carrying plate (41) is used to make the contact mat and is formed with openings (42) adjacent to the locations at which the inverted bowl-shaped humps (49) are to be provided and with anchoring means adjacent to the edges of said openings and the bowl-shaped humps of material having a rubberlike elasticity are individually injected onto said carrying plate in the injection mold (53, 54).

7. An injection mold for manufacturing injection moldings in accordance with the process according to any of claims 1 to 6, which mold comprises two or more mold sections (1, 2, 3, 1a,

2a, 1b, 34, 35, 36, 53, 54), which are adapted to be temperature-controlled at least in part and enclose a cavity (4, 4a, 37, 39) for the injection molding, which is adapted to be supplied with the molding material by means of an injection nozzle (8) through an adapted injection opening (7, 7a, 7b), characterized in that the injection nozzle comprises a nozzle tip (9, 9a, 24, 25, 30), which protrudes beyond the nozzle body and is adapted to be engaged at or introduced into the entrance opening (7, 7a, 7b), which is adapted in diameter, said nozzle tip has only a low thermal conductivity in its longitudinal direction and has an inside cross-section which is smaller than 1 mm², particularly 0.5 mm², and a supply passage (10) which is formed in the injection nozzle (8) and leads to the nozzle tip (9, 9a, 24, 25, 30) has an inside cross-section which is a multiple of the flow area of the nozzle tip.

8. An injection mold according to claim 7, characterized in that a nozzle body (11) which contains the supply passage (10) and a heat transfer jacket (16, 26) extends with a clearance on all sides into a blind opening (5) of a mold section (1, 35, 36) and the bottom (6) of the blind opening is conically countersunk from the passage opening (7) for the nozzle tip (9), which protrudes beyond the nozzle body (11).

9. An injection mold according to claims 7 and 8, characterized in that the end of the nozzle tip (9, 27, 33) is flush with the surface defining the cavity (4, 37, 39).

10. An injection mold according to claims 7 and 8, characterized in that the nozzle tip consists of a hollow needle and its end protrudes from the surface defining the cavity (4, 37, 39) into the latter approximately by the diameter of the hollow needle.

11. An injection mold according to claim 7 or 8, characterized in that the nozzle tip consists of a hollow needle (9, 9a) and is adapted to be moved into and out of the cavity (4) through the entrance opening (7).

12. An injection according to any of claims 7 to 11, characterized in that the hollow needle (9, 9a) has a wall thickness of an order of 0.05 to 0.5 mm and its bore is at least 0.1 mm in diameter.

13. An injection mold according to any of claims 7 to 12, characterized in that at least the nozzle tip (24, 25) is integrally formed with the end of the injection nozzle and at least in part of its length, particularly adjacent to constrictions (28, 32), has wall thicknesses below 0.5 mm in order to reduce the heat flux in the longitudinal direction of the nozzle tip.

14. An injection mold according to claim 13, characterized in that the nozzle tip (25, 30) comprises an engaging head (27, 33), which is enlarged in diameter and fits into the entrance opening (7a, 7b) of the cavity.

15. An injection mold according to claim 13 or 14, characterized in that an extension (29) which is integral with the injection nozzle (8) is connected by a plug or screw joint (31) to a replaceable nozzle tip (30).

16. An injection mold according to claim 15, characterized in that heat-insulating inserts are provided between the extension (29) and the nozzle tip (33).

17. An injection mold according to any of claims 7 to 16, characterized in that a sieve (14), which has openings that are smaller than the passage opening of the nozzle tip (9) is provided in the feed path for the material, particularly adjacent to the joint (12) connecting the injection nozzle (8) to a line that leads to an transfer molding press.

18. An injection mold according to any of claims 7 to 17, characterized in that a plurality of injection nozzles (8) are provided for a mold cavity (39).

19. An injection mold according to any of claims 7 to 18 for manufacturing a contact mat, particularly for the keyboards of calculators, typewriters and telephone sets, in which inverted bowlshaped humps are provided at their bottom with contact elements, characterized in that a change mold (34, 35, 36) is provided, a first mold part (34) and a second mold part (35) of said mold in their final arrangement enclose cavities (37) for the contact elements, the second mold section (35) is provided with an injection mold (8) for each cavity, and the first mold section (35) is movable to a position in which it communicates with a third mold section (36), which together with the first mold section (34) and the contact elements (38) remaining thereon encloses the common cavity (39) for the mat and adjacent to each hump is provided with a further injection nozzle (8) for a simultaneous injection of the material for forming the mat.

## Revendications

1. Procédé de fabrication de pièces moulées par injection dans un moule d'injection qui comprend deux ou plus de deux éléments de moule (1, 2, 3 ; 1a, 2a ; 34, 35, 36 ; 53, 54) qui renferment une empreinte de moulage (4 ; 4a ; 37, 39) pour la pièce moulée par injection, empreinte dans laquelle la matière de fabrication est injectée directement à l'aide d'au moins une buse d'injection (8) à travers une ouverture d'entrée (7 ; 7a ; 7b) correspondante, le moule étant chauffé à une température de solidification ou de durcissement de la matière de fabrication qui présente une température différente à l'état d'injection, sous forme liquide, matière qui est en particulier une matière plastique ou une matière qui se solidifie ou se vulcanise à chaud, caractérisé par le fait que la matière de fabrication est injectée au moyen d'une pointe de buse (9 ; 24, 25 ; 30) qui fait saillie au-delà du corps (8) de la buse, pointe qui peut être mise en place contre une ouverture d'entrée (7, 7a, 7b) présentant un diamètre approprié, ou enfoncée dans cette ouverture, et qui ne présente qu'un faible pouvoir de conduction thermique dans sa direction longitudinale, et dont la section libre est inférieure à 1 mm², notamment à 0,5 mm², un canal d'amenée (10) de la buse d'injection (8) qui mène à la pointe de buse (9 ; 9a, 24, 25 ; 30) présentant une section libre qui représente plusieurs fois la section de passage de la pointe de buse.

2. Procédé selon la revendication 1, caractérisé par le fait qu'au moment de l'opération d'injection, la pression de la matière qui règne dans la région d'amenée contenant le canal d'amenée (10) de la buse d'injection (8) est surveillée et réglée, l'élévation de la pression qui se produit au moment du remplissage total de l'empreinte du moule (4, 4a) étant utilisée comme critère pour le remplissage de l'empreinte de moulage.

3. Procédé selon la revendication 1 ou 2, caractérisé par le fait que, lors de l'opération de moulage par injection, la pointe de buse de la buse (8) d'injection, qui est formée par une canule terminale (9a), est introduite dans l'empreinte de moulage (4) à travers l'ouverture d'entrée (7) et retirée de cette empreinte au cours de l'injection, en fonction de l'état de remplissage de l'empreinte de moulage.

4. Procédé selon l'une des revendications 1 à 3, caractérisé par le fait que, dans le cas de la fabrication de matrices de contacts (40) qui présentent plusieurs protubérances (49) présentant la forme de godets retournés, à partir d'une matière possédant l'élasticité du caoutchouc, à l'état solidifié ou vulcanisé, la matière est injectée dans un moule (34 à 36 ; 53, 54) présentant une empreinte de moule correspondante, pour chaque protubérance (49), dans une ouverture d'injection (7) qui lui correspond en propre et qui est disposée au centre de cette protubérance.

5. Procédé selon la revendication 4, caractérisé par le fait que tout d'abord, on injecte des pastilles de contact individuelles (38) et que l'on injecte ensuite sur ces pastilles les protubérances en forme de godets de la matrice.

6. Procédé selon la revendication 4 ou 5, caractérisé par le fait que, pour la matrice de contact, on utilise une plaque support (41) faite d'une matière rigide, et qui présente des ouvertures (42) dans la région des protubérances (49) en forme de godets retournés qui devront être formés, et qui présente des ancrages dans les régions marginales de ces ouvertures, et contre lesquels les protubérances en forme de godets en matière possédant l'élasticité du caoutchouc sont injectées individuellement dans le moule d'injection (53, 54).

7. Moule d'injection pour la fabrication de pièces moulées par injection conformément au procédé selon l'une quelconque des revendications 1 à 6, qui présente deux ou plus de deux éléments de moule (1, 2, 3, 1a, 2a, 1b, 34, 35, 36, 53, 54) pouvant être au moins en partie équilibrés en température, qui renferment une empreinte de moulage (4, 4a, 37, 39) pour la pièce moulée par injection, empreinte qui peut être alimentée en matière de fabrication au moyen d'une buse d'injection (8), à travers une ouverture d'injection appropriée (7, 7a, 7b), caractérisé par le fait que la buse d'injection présente une pointe de buse (9, 9a, 24, 25, 30) qui fait saillie au-delà du corps de la buse, et qui peut être appuyée contre une ouverture d'entrée (7, 7a, 7b) présentant un diamètre adapté, ou être enfoncée dans cette ouverture, ne présente qu'un faible pouvoir de transmission de la chaleur dans sa direction longitudinale, et dont la section libre est maintenue inférieure à 1 mm², notamment à 0,5 mm², un canal d'amenée (10) de la buse d'injection (8), qui mène à la pointe (9, 9a, 24, 25, 30) de la buse, présentant une section libre qui représente plusieurs fois la section de passage de la pointe de buse.

8. Moule d'injection selon la revendication 7, caractérisé par le fait qu'un corps de buse (11), qui renferme le canal d'amenée (10) et une enveloppe d'équilibrage de température (16, 26) entourant ce canal, avec un certain écartement de tous côtés, est engagé dans une ouverture borgne (5) d'une partie (1, 35, 36) du moule, et que le fond (6) de l'ouverture borgne est creusé avec une forme conique sur l'ouverture de passage (7) pour la pointe de buse (9) qui émerge au-delà du corps de buse (11).

9. Moule d'injection selon les revendications 7 et 8, caractérisé par le fait que l'extrémité de la pointe de buse (9, 27, 33) est à affleurement de la paroi de l'empreinte de moulage (4, 37, 39).

10. Moule d'injection selon les revendications 7 et 8, caractérisé par le fait que l'extrémité de la pointe de buse, qui est réalisée sous la forme d'une canule, fait saillie dans l'empreinte de moulage (4, 37, 39), au-delà de la paroi, sur une longueur à peu près égale au diamètre de la canule.

11. Moule d'injection selon la revendication 7 ou 8, caractérisé par le fait ce que la pointe de buse présentant la forme d'une canule (9, 9a) peut être enfoncée dans l'empreinte de moule (4) et être retirée de cette empreinte à travers l'ouverture d'entrée (7).

12. Moule d'injection selon une quelconque des revendications 7 à 11, caractérisé par le fait que l'épaisseur de paroi de la canule (9, 9a) est d'un ordre de grandeur de 0,05 à 0,5 mm et que son diamètre de lumière est d'au moins 0,1 mm.

13. Moule d'injection selon l'une quelconque des revendications 7 à 12, caractérisé par le fait qu'au moins la pointe de buse (24, 25) est formée d'une seule pièce à l'extrémité de la buse d'injection (8) et présente, au moins dans une région partielle de sa longueur, en particulier dans la région des rétrécissements (28, 32), des épaisseurs de paroi inférieures à 0,5 mm, afin de réduire le flux de transmission de la chaleur dans la direction longitudinale de la pointe de buse.

14. Moule d'injection selon la revendication 13, caractérisé par le fait que la pointe de buse (25, 30) possède une tête d'appui (27, 33) qui s'ajuste dans l'ouverture d'entrée (7a, 7b) de l'empreinte de moule.

15. Moule d'injection selon la revendication 13 ou 14, caractérisé par le fait qu'une pièce saillante (29), qui est d'une seule pièce avec la buse d'injection (8), est reliée à une pointe de buse interchangeable (30) par l'intermédiaire d'une liaison à emmanchement ou vissée (31).

16. Moule d'injection selon la revendication 15, caractérisé par le fait que des insertions isolantes de la chaleur sont prévues entre la pièce saillante (29) et la pointe de buse (33).

17. Moule d'injection selon une des revendications 7 à 16, caractérisé par le fait qu'il est prévu un filtre (14) sur le trajet d'amenée de la matière, en particulier dans la région (12) de raccordement entre la buse d'injection (8) et une conduite qui mène à une presse d'injection, les ouvertures de ce filtre étant plus petites que l'ouverture de passage de la pointe de buse (9).

18. Moule d'injection selon une quelconque des revendications 7 à 17, caractérisé par le fait que plusieurs buses d'injection (8) sont prévues pour une même empreinte de moule (39).

19. Moule d'injection selon une quelconque des revendications 7 à 18, destiné à la fabrication d'une matrice de contact, en particulier pour les claviers de calculatrices, machines à écrire et téléphones, dans lequel des protubérances en forme de godets retournés renferment des éléments de contact dans leur fond, caractérisé par le fait qu'il est prévu un moule interchangeable (34, 35, 36), dans lequel un premier élément de moule (34) renferme, avec un deuxième élément de moule (35), des empreintes de moulage (37) pour les éléments de contact (38), qu'il est prévu, dans le deuxième élément de moule (35), une buse d'injection (8) pour chaque empreinte de moulage, et que le premier élément (34) du moule peut être mis dans une position d'assemblage avec un troisième élément de moule (36) qui, avec le premier élément de moule (34) et les éléments de contact (38) qui restent sur ce premier élément, renferme l'empreinte de moulage commune pour la matrice, et est muni, dans la région de chaque protubérance, d'une autre buse d'injection (8) servant à injecter simultanément la matière qui formera la matrice.

FIG. 2

FIG.1

FIG.3

# FIG.4

# FIG.5

# FIG.6

# FIG.7

# FIG.8

# FIG.9

# FIG.10